# EUROPEAN PATENT SPECIFICATION

(11) **EP 4 415 847 B1**
(45) Date of publication and mention of the grant of the patent: **02.12.2026**
(21) Application number: 21794343.0
(22) Date of filing: 14.10.2021
(51) Int. Cl.: B01D 17/12, B01D 21/30, C10G 33/08

(54) **A METHOD FOR RECOVERING WASTE OIL**
VERFAHREN ZUR RÜCKGEWINNUNG VON ALTÖL
PROCÉDÉ DE RÉCUPÉRATION D'HUILE USAGÉE

(43) Date of publication of application: 21.08.2024
(73) Proprietor: SKF Recondoil AB, 120 30 Stockholm (SE)
(72) Inventor: HURNASTI, Lasse, 14141 Huddinge (SE); AGUILERA COSTA, Joakim Andres, 14560 Norsborg (SE)
(74) Representative: Kohl, Thomas
(86) International application number: PCT/EP2021/078460
(87) International publication number: WO 2023/061596

(56) References cited:
- EP-A2- 1 720 013
- WO-A1-2018/199837
- US-A1- 2013 026 082
- US-A1- 2016 207 791
- US-A1- 2019 192 996
- US-A1- 2020 230 520

## Description

### TECHNICAL FIELD OF THE INVENTION

The present invention relates to a method for recovering waste oil into one or more oil products.

### RELATED ART

Recovering of waste oil into usable oil products may be problematic. One problem is to get rid of the waste classification and another problem is the strict regulations around oil products, their classification and their registrations.

The recovery of waste oil is however important for the possibility to reuse oils and therefore an important factor for the environmental future and the limited nature resources of oils. Purification of waste oil, also called slop oil, is problematic in many ways. Waste oil can comprise both oil, water, particles and emulsions. An example of oil treatment is disclosed in wo2018/199837.

### SUMMARY

One object of the invention is to provide a reliable and efficient method and system for recovering of waste oil into oil products.

This is achieved in a method in a waste oil recovering system according to the independent claim.

Hereby a method is provided for recovering of waste oil, where the treatment is adjusted specifically for different batches of waste oil and wherein the treated waste oil can be separated into different storages based on different measured properties. The adaptation of oil treatment functions in the oil treatment part is provided automatically and in dependence on measured properties, such as a density, a viscosity, amount of water, amount of ash, amount of particles and flash-point, to provide an efficient oil treatment. The separation of the treated waste oil into different storages based on the measured properties provides for a way to separate the treated waste oil in a suitable way such that final oil products can be achieved. Hereby an automatic and efficient process for recovery of waste oil into oil products is provided.

In the embodiment of the invention the storages are assigned to predefined value ranges for one or more of at least water content, density and viscosity, where said value ranges correspond to ranges for specific oil products and/or to ranges according to specific customer requests.

In one embodiment of the invention the method further comprises the steps of:
- forwarding a sample of the treated oil to an external laboratory where analyses as requested by a customer are performed on the sample of treated oil;
- receiving from the external laboratory analyse test results;
- comparing said analyse test results with a customer specification;
- evaluating based on this comparison if the purified waste oil is within customer specification requirements.

Analyses by a third party laboratory assure that customer specifications are met and an oil product according to customer requirements and customer specifications can be offered. In one embodiment of the invention the method further comprises the steps of:
- forwarding a sample of the received waste oil, before and/or after treatment in the waste oil recovering system, to an external laboratory where analyses are performed in order to provide a report which shows a possible sameness with one or more oil substances which are already registered at a chemical agency, wherein said report further comprises CAS-numbers for these oil substances;
- receiving said report from the external laboratory;
- generating one or more oil product documents, such as product data sheet and safety data sheet, which are required for selling the oil as an oil product, wherein at least some of the information needed for these oil product documents is retrieved from a database at the chemical agency based on said CAS-numbers.

If the oil products achieved in the recovering process according to the invention are shown to correspond to already registered oil substances in the report, the recovered oil can be sold directly as oil products without the need to register a new product. CAS numbers for oil substances to which sameness have been shown in the report can be used also for this oil product. The CAS numbers are used for retrieving information from the chemical agency for producing documents required for offering the oil product, such as product data sheet and safety data sheet. A strict procedure is according to the invention followed in order to guarantee the quality of the final oil product.

A time-consuming procedure for the registering of a new oil product can hereby be avoided. Hereby the oil can get rid of its waste classification which otherwise may be problematic. Hereby waste oil can be recovered more efficiently, and nature resources can be saved. The method according to the invention provides for a robust and reproducible procedure for the recovering of waste oil into new oil products.

Further embodiments are described in the dependent claims and in the detailed description.

### BRIEF DESCRIPTION OF THE DRAWINGS

Figure 1 shows schematically a waste oil recovering system according to one embodiment of the invention.
Figure 2 shows schematically an oil treatment part according to one embodiment of the invention.
Figures 3 is a flow chart according to one embodiment of the invention.
Figure 4 is a flow chart according to one embodiment of the invention.

### DETAILED DESCRIPTION

A method for recovering waste oil into one or more oil products is provided according to the invention. Waste oil is a term used throughout the description and the claims and refers to used oil which has been classified as waste. Another commonly used term is slop oil. Waste oil as used in this patent application also covers slop oil. The waste oil may comprise for example slurry oil, crude oil, industrial oil, petroleum products, bio-oils, industrial emulsions and cutting fluids.

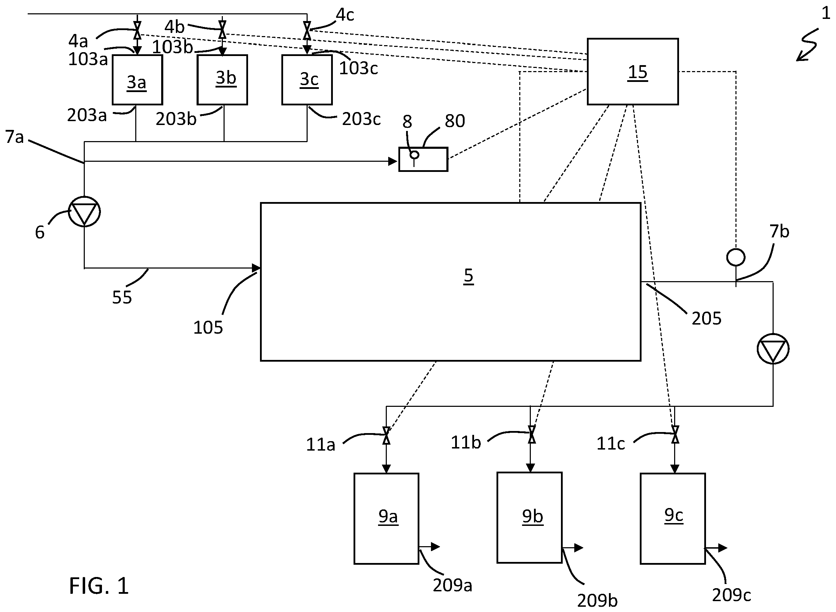

In Figure 1, a waste oil recovering system 1 for recovering waste oil into one or more oil products is schematically shown. Said waste oil recovering system 1 comprises at least one receiving tank 3a, 3b, 3c into which waste oil to be recovered in the waste oil recovering system 1 is received. The number of receiving tanks 3a, 3b, 3c can of course be varied. In this schematic drawing three receiving tanks 3a, 3b, 3c are shown just as an example. By providing more than one receiving tank different batches of received waste oil to be recovered can be kept separated which may be suitable if origin and/or quality and/or type of oil will differ between different batches of waste oil received. Suitably but not necessarily each receiving tank 3a, 3b, 3c comprises one receiving tank inlet valve 4a, 4b, 4c each which is provided in connection with an inlet 103a, 103b, 103c of each receiving tank 3a, 3b, 3c respectively. The waste oil recovering system 1 comprises also a control system 15 which can be provided in communication contact with the receiving tank inlet valves 4a, 4b, 4c and configured to control the receiving tank inlet valves 4a, 4b, 4c such that different batches of received waste oil can be separated into different receiving tanks 3a, 3b, 3c. Alternatively, each receiving tank 3a, 3b, 3c can comprise separate inlets whereby an operator of the waste oil recovering system manually can control into which receiving tank new waste oil is received.

The waste oil recovering system 1 comprises furthermore an oil treatment part 5 comprising an inlet 105 which is fluidly connected, via a fluid line 55, to an outlet 203a, 203b, 203c of the at least one receiving tank 3a, 3b, 3c, whereby waste oil to be treated can be transferred from the at least one receiving tank to the oil treatment part 5. In some embodiments of the invention one batch of waste oil is transferred from one of the receiving tanks 3a, 3b, 3c at a time. A pump 6 is suitably provided in said fluid line 55 for pumping the waste oil from the receiving tanks 3a, 3b, 3c to the oil treatment part 5.

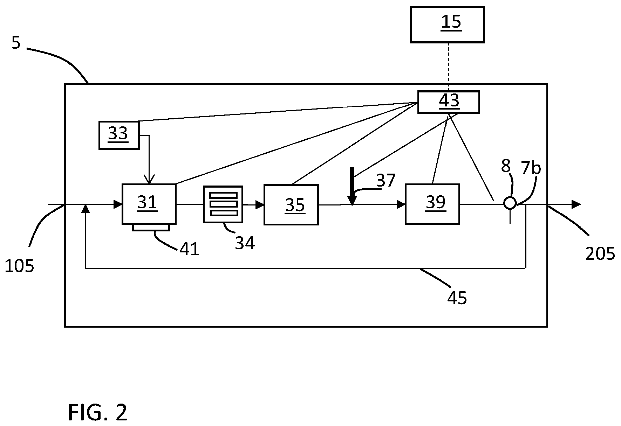

One example of an oil treatment part 5 is shown in Figure 2. The oil treatment part 5 comprises a number of different oil treating functions, such as one or more of a settling tank 31, a chemical addition function 33, a mixing system 34, a filter 35, a water injection nozzle 37, a decanter and/or high speed centrifuge 39 and a heater 41. The oil treatment part 5 does not need to comprise all of these functions and can additionally comprise other oil treating functions. The functions can be connected in different orders and the schematic illustration in Figure 2 is just an example. One or more of a water content, a sludge content and a particle content in the waste oil is decreased by said treating in the oil treatment part. The oil treatment part 5 is configured such that certain settings in at least one of the oil treating functions of the oil treatment part 5 can be adjusted. These settings can be automatically adjusted from the control system 15 which can be provided in communication contact with a communication unit 43 of the oil treatment part 5 as shown in Figure 2 or in direct communication contact with the different oil treating functions 31, 33, 34, 35, 37, 39, 41 in the oil treatment part 5. The settings can for example be adjusted in response to different sensor readings which will be further described below. By the adjustment of settings in the oil treatment part 5 the oil treatment part 5 can be specifically adapted for different types of oil to be treated. Hereby an efficient oil treatment can be provided which is automatically adjusted for different types of waste oil. There are a number of different settings in the different oil treatment functions of the oil treatment part 5 which can be adjusted. Some of them will be described here. They can be combined in different ways and all of them need not be provided in the same system. The oil treatment part 5 will comprise one or more decanter centrifuge and/or high speed centrifuge 39. A setting which can be adjusted for a centrifuge is the flow rate through the centrifuge. If for example a water content in the oil is increasing it may be beneficial to decrease a flow rate through the centrifuge. In some embodiments of the invention, a disc stack centrifuge having an outlet chamber (heavy phase or light phase outlet chamber) in which a fluid level can be controlled is provided in the oil treatment part 5. This can be achieved for example by removing a gravity disc or by providing a gravity disc with a comparatively large inner diameter. Hereby the heavy and/or light phase outlet chamber of the disc stack centrifugal separator will allow for a fluid level to be controlled to different positions. By controlling the fluid level in the heavy and/or light phase outlet chamber the position of the interface between oil and water in the disc stack will also be moved. In such embodiments another setting which can be adjusted is a backpressure provided to an outlet of the disc stack centrifuge. By controlling this backpressure for such a disc stack centrifuge a fluid level in the outlet chamber is controlled whereby also a position of an interface between light and heavy phase in the disc stack can be controlled whereby a more efficient separation can be provided. For example a backpressure provided to a light phase outlet of the centrifuge can be controlled to decrease and/or a backpressure provided to a heavy phase outlet of the centrifuge can be controlled to increase if a value of a measured density and/or viscosity of a retrieved light phase is increasing. By compensating for changes for density and/or viscosity the position of the oil and water interface inside the centrifuge disc stack can be maintained in desired position giving highest possible separation efficiency automatically.

In some embodiments of the invention a mixing system 34 is provided in the oil treatment part 5, for example for mixing of contaminated oil and a separation aid. Said mixing system can in some embodiments comprise at least two mixers connected in parallel and at least one valve which can be controlled for allowing contaminated oil to enter one or more of the mixers, said mixing system further comprising a pressure measuring device comprising at least two pressure sensors which are positioned in the mixing system such that they can measure a pressure difference over at least one of the mixers and/or over the complete mixing system. Hereby, by connecting one or more of the mixers into the purification system in dependence of a measured pressure difference over at least one of the mixers or over the whole mixing system it can be assured that the pressure difference will not be too high. By connecting more mixers in the mixing system the pressure difference can be kept low while the flow rate through the system can be upheld. A higher pressure difference over a mixer will provide droplets of heavy phase, for example water or salty water, of smaller size, i.e. the higher pressure difference the smaller droplets. Droplets of heavy phase in a contaminated oil are hard to separate from the light phase, i.e. from the oil, when the droplets are smaller than a certain limit. Hereby, if such a mixing system is provided a setting which can be adjusted is how many mixers that are connected.

In some embodiments of the invention a water injection nozzle 37, also called a heavy phase injection nozzle, is provided in the oil treatment part 5. Settings which can be adjusted in these embodiments are then an amount of added water (heavy phase) and droplet sizes of the added water. By adding droplets of heavy phase into the contaminated oil, these added droplets will by coalescence attract droplets of heavy phase already present in the contaminated oil. Hereby droplets of heavy phase will combine into bigger droplets. Especially very small sized droplets of heavy phase can be caught by the added droplets whereby they will be more easily separated in a separation device. A separation device can be effective for removing all droplets above a certain size but will be less effective for removing droplets below a certain size. Hereby such a heavy phase injection nozzle will improve separation efficiency by promoting more aggregation/coalescence of the smallest droplets into larger droplets which are easier to separate. The sizes of the added droplets of heavy phase can be controlled to be of suitable size, i.e. suitable for being possible to remove in the separation device and suitable for attracting other droplets of heavy phase.

Other settings of the oil treatment part 5 which can be adjusted are for example a temperature of a heater 41 which may be provided in the oil treatment part 5. If for example a high viscosity is measured it may be beneficial to increase the temperature of the heater. Another setting which can be adjusted is amount and type of a chemical separation aid and/or emulsion breaking chemicals added in a chemical addition function 33 which may be provided in the oil treatment part 5. This may be dependent on amount of particles and type of waste oil. Other settings that can be changed is for example how many filters 35 that are used and time of settling in a settling tank 31. A flow rate through the oil treatment part 5 can also be adjusted, for example in dependence on measured water content. For a higher water content it may be beneficial to decrease a flow rate through the oil treatment part and thereby increase retention time for the oil in the oil treatment part. As discussed above the oil treatment part 5 can comprise one or more of these mentioned oil treatment functions and also other oil treating functions. The settings which are adjusted in the oil treatment part 5 are made in dependence of at least one measured property.

The control system 15 is provided in communication contact with the oil treatment part 5 such that settings of one or more of the oil treatment functions can be controlled from the control system 15.

The waste oil recovering system 1 can furthermore comprise one or more sensing positions 7a, 7b. In Figure 1 a first sensing position 7a and a second sensing position 7b are shown. One or more sensors 8 can be provided at the sensing positions or alternatively the sensing position is a sample retrieving position from which a sample of the waste oil can be retrieved and forwarded to an external analysing equipment 80 comprising one or more sensors 8. In Figure 1 the first sensing position 7a is a sample retrieving position and the second sensing position 7b comprises a sensor 8. This can however differ in other embodiments. The second sensing position 7b can in some embodiments be provided inside the oil treatment part 5 instead of after, which is shown in Figure 2. The sensing positions 7a, 7b are provided for measuring one or more properties in the received waste oil before and/or during and/or after an oil treatment. By providing one or more sensing positions 7a, 7b in different locations in the waste oil recovering system 1 the measurements can be provided either before or after oil treatment in the oil treatment part 5 or both before and after treatment. Furthermore, the measurements can be provided during treatment if first only a part of the waste oil is treated, whereby measurements are performed on this treated part of the oil whereafter settings in the oil treatment part 5 can be adjusted before the rest of the oil is treated. Another possibility is to provide a sensing position 7b within the oil treatment part 5 as shown in Figure 2 and to add a recirculation fluid line 45 inside the oil treatment part 5 such that treated oil can be recirculated for further treatment during a first part of oil treatment where settings are adjusted according to sensor readings. When settings have been adjusted according to measured properties from the sensing positions 7a, 7b and when the oil treatment has been stabilised, recirculation can be stopped and treated oil can be transferred out from the oil treatment part 5 and into storages 9a, 9b, 9c provided in the waste oil recovering system 1. The one or more properties which are measured at the sensing positions 7a, 7b comprise one or more of a density, a viscosity, amount of water, amount of ash, amount of particles and flash-point.

The waste oil recovering system 1 comprises hereby at least two storages 9a, 9b, 9c which are fluidly connected to an outlet 205 from the oil treatment part 5 via one storage valve 11a, 11b, 11c each such that an outlet flow of the treated waste oil from the oil treatment part 5 can be directed to any one of the storages 9a, 9b, 9c by control of the storage valves.

The control system 15 of the waste oil recovering system 1 is hereby provided in communication contact with one or more sensors 8 at the sensing positions 7a, 7b and/or at the external analysing equipment 80 if samples of waste oil are forwarded to an external analysing equipment from a sensing position 7a. The control system 15 is furthermore provided in communication contact with the oil treatment part 5. As shown in Figure 2 this can be via a communication unit 43 of the oil treatment part 5 or directly to each of the oil treatment functions 31, 33, 35, 39, 41 of the oil treatment part 5. The control system is furthermore provided in communication contact with the storage valves 11a, 11b, 11c. The control system 15 is configured to control an adjustment of one or more settings in the oil treatment part 5 of the waste oil recovering system 1 based on at least one measured value of said one or more measured properties of the waste oil. The control system 15 is further configured to control said storage valves 11a, 11b, 11c and hereby control to which one of the storages 9a, 9b, 9c an outlet flow of treated waste oil from the oil treatment part 5 is directed in dependence of at least one measured value of said one or more measured properties. Each of the storages 9a, 9b, 9c is assigned to predefined value ranges for at least one of the properties. In the invention each storage 9a, 9b, 9c is used for value ranges for at least one of water content, density and viscosity corresponding to such value ranges for a specific oil product. Hereby treated waste oil can be sorted into different storages 9a, 9b, 9c according to which final oil product it possibly can be used as after treatment. In other embodiments of the invention each storage 9a, 9b, 9c is used for value ranges for at least one of water content, density and viscosity corresponding to ranges according to specific customer requests. Hereby one of the storages 9a, 9b, 9c can for example be used for treated oil which is within ranges for specific customer requests. This can be one or more ranges for one or more of the measured properties. Another one of the storages 9a, 9b, 9c can in such an embodiment be used for treated oil which does not fall within ranges for this specific customer requests. Specific customer requests can comprise acceptable ranges for one or more of water content, density, viscosity and ash. Often such ranges will be a smaller range, as requested by the specific customer, within these broad ranges: water content wt-% from 0,1-3%, density: 800-997 kg/m³ at 15,6 °C, viscosity: 10-850 mm²/s at 50°C, ash content wt-% from 0,01-2%. Furthermore, the customer can request other customer specific measurements. For example, that an amount of certain substances, such as for example pcb, sulfur, metals and/or additives, should be kept below certain threshold levels.

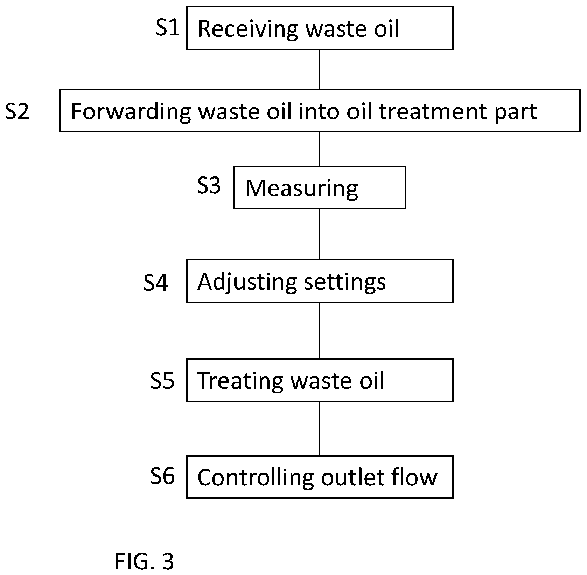

According to the invention a method for recovering waste oil into one or more oil products is also provided. In Figure 3 a flow chart of method steps according to the invention is shown.

The method steps are described in order below:
S1: Receiving waste oil in one or more receiving tanks 3a, 3b, 3c of a waste oil recovering system 1. It may in some embodiments of the invention be suitable to identify and document the incoming waste oil. For example, origin, quantity, arrival date etc may be documented. Such documentation can possibly be used for improvements of later treatments. Statistics and analyse results from previous recovering processes can in some embodiments be used for providing better and more efficient recovering processes for later performed recovery processes, for example if origin of waste oil is the same some of the analyses may be omitted and some settings in the oil treatment part 5 can be the same.
S2: Forwarding waste oil from one receiving tank 3a, 3b, 3c at a time into an oil treatment part 5 of the waste oil recovering system 1.
S3: Measuring one or more properties in the waste oil by at least one sensor 8, which is provided either at a sensing position 7a, 7b in the waste oil recovering system 1 or at an external analysing equipment 80 to which a sample can be forwarded from a sensing position 7a, 7b, wherein said one or more properties comprise one or more of a density, a viscosity, amount of water, amount of ash, amount of particles and flash-point. Said step of measuring can be performed before and/or during and/or after a treatment of the waste oil as discussed above.
S4: Adjusting one or more settings in the oil treatment part 5 of the waste oil recovering system 1 based on at least one measured value of said one or more measured properties of the waste oil, said adjusting being performed by a control system 15 provided in communication contact with the oil treatment part 5 and the at least one sensor 8.
S5: Treating the forwarded waste oil in the oil treatment part 5 of the waste oil recovering system 1, said oil treatment part 5 comprising one or more of a settling tank 31, a chemical addition function 33, a mixing system 34, a filter 35, a water injection nozzle 37, a decanter and/or high speed centrifuge 39 and a heater 41, whereby one or more of a water content, a sludge content and a particle content in the waste oil is decreased by said treating. The step of treating may in some embodiments of the invention comprise to recirculate at least a part of the treated oil through the oil treatment part 5 during an initial part of the oil treatment when different settings in the oil treatment part are adjusted as discussed above.
S6: Controlling from the control system 15 an outlet flow of the treated waste oil from the oil treatment part 5 to be directed to one of a number of different storages 9a, 9b, 9c provided in the waste oil recovering system 1, wherein said controlling is provided in dependence of at least one measured value of said one or more measured properties, whereby the storages 9a, 9b, 9c are assigned to different predefined value ranges for at least one of the properties. As discussed above, the storages 9a, 9b, 9c are in some of the embodiments assigned to predefined value ranges for one or more of at least water content, density and viscosity, where said value ranges correspond to ranges for specific oil products.

The storages 9a, 9b, 9c are assigned to predefined value ranges for one or more of at least water content, density and viscosity, where said value ranges correspond to ranges according to specific customer requests.

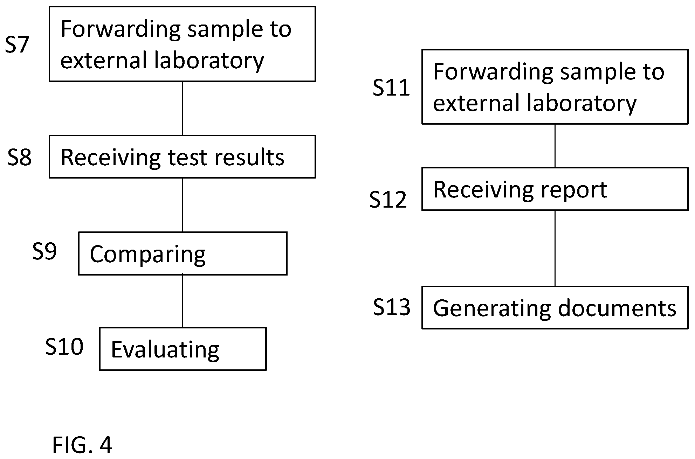

The method according to the invention can in some examples, but not necessarily, comprise some further steps which are illustrated in a flow chart of Figure 4:
S7: Forwarding a sample of the treated oil to an external laboratory where analyses as requested by a customer are performed on the sample of treated oil. One or more samples of the treated oil can be retrieved from outlets 209a, 209b, 209c of one or more of the storages 9a, 9b, 9c.
S8: Receiving from the external laboratory analyse test results.
S9: Comparing said analyse test results with a customer specification.
S10: Evaluating based on this comparison if the purified waste oil is within customer specification requirements. The customer specification requirements may comprise a primary specification and a secondary specification, whereby if the primary specification is not met the analyse test results are compared with the secondary specification. If none of the customer specifications are met the oil will keep its waste classification.

The method according to the invention can in some examples, but not necessarily, comprise some further steps which can be performed at any stage of the procedure, i.e. possibly before the treatment of the waste oil. These steps are illustrated in Figure 4 in a parallel flow chart:
S11: Forwarding a sample of the received waste oil, before and/or after treatment in the waste oil recovering system, to an external laboratory where analyses are performed in order to provide a report which shows a possible sameness with one or more oil (oil/petroleum/UVCB) substances which are already registered at a chemical agency. The report provided by the external laboratory comprises also CAS-numbers for these oil substances. Such a report may be referred to as a REACH, Registration, Evaluation and Authorisation of Chemicals, sameness report. The analyses can comprise for example one or more of: identifying the presence and distribution of hydrocarbon types, boiling point range, viscosity, density and flash point. If these parameters are found to be within allowed ranges for a registered oil substance the report will prove the sameness with this registered oil substance and according to article 2.7d stated in REACH, a sameness needs to be proven between an already registered substance and the substance that is going to utilize the exemption of registration which is stated in article 2.7d. The sameness is typically shown by performing a report which includes a series of analyses on the substance to prove the sameness. This report is often called REACH sameness report.
S12: Receiving said report from the external laboratory.
S13: Generating one or more oil product documents, such as product data sheet and safety data sheet, which are required for selling the oil as an oil product, wherein at least some of the information needed for these oil product documents is retrieved from a database at the chemical agency based on said CAS-numbers.

Such a report for showing a possible sameness may be performed only occasionally during use of a waste oil recovering system or possibly only once at start when such a system is to be used for a new type of waste oil to be treated. If the waste oil recovering system is to be used for recovering of waste oil from a specific area the report as achieved from an initial analyse can be utilised for the same type of waste oil treated later in the waste oil recovering system. Thanks to the report showing sameness and thanks to the exemption from the need to register a new product as stated in article 2.7 in REACH if a sameness with an already registered product can be proven, a new and time-consuming registration of a new oil product can be avoided by this procedure.

Further a software program product, such as a computer program product, may be provided comprising instructions which, when executed by a processor in a control system 15 in a waste oil recovering system 1 according to the invention, cause the control system 15 to control an adjustment of one or more settings in the oil treatment part 5 of the waste oil recovering system 1 based on at least one measured value of said one or more measured properties of the waste oil and to control said storage valves 11a, 11b, 11c and hereby control to which one of the storages 9a, 9b, 9c an outlet flow of treated waste oil from the oil treatment part 5 is directed in dependence of at least one measured value of said one or more measured properties, whereby each of the storages 9a, 9b, 9c is assigned to predefined value ranges for at least one of the properties.

## Claims

1. A method for recovering waste oil into one or more oil products, said method comprising the steps of:
- receiving waste oil in one or more receiving tanks (3a, 3b, 3c) of a waste oil recovering system (1);
- forwarding waste oil from one receiving tank (3a, 3b, 3c) at a time into an oil treatment part (5) of the waste oil recovering system (1);
- measuring one or more properties in the waste oil by at least one sensor (8), which is provided either at a sensing position (7a, 7b) in the waste oil recovering system (1) or at an external analysing equipment (80) to which a sample can be forwarded from a sensing position (7a, 7b), wherein said one or more properties comprise one or more of a density, a viscosity, amount of water, amount of ash, amount of particles and flash-point, said step of measuring can be performed before and/or during and/or after a treatment of the waste oil;
- adjusting one or more settings of one or more oil treatment functions in the oil treatment part (5) of the waste oil recovering system (1) based on at least one measured value of said one or more measured properties of the waste oil, said adjusting being performed by a control system (15) provided in communication contact with the oil treatment part (5) and the at least one sensor (8), wherein the step of adjusting one or more settings in the oil treatment part comprises adjusting settings in one or more of a decanter centrifuge and/or a high speed centrifuge, a chemical addition function, a mixing system, a filter, a settling tank, a water injection nozzle and a heater;
- treating the forwarded waste oil in the oil treatment part (5) of the waste oil recovering system (1), said oil treatment part (5) comprising a decanter centrifuge and/or a high speed centrifuge and one or more of, a chemical addition function, a filter, a settling tank, a water injection nozzle and a heater, whereby one or more of a water content, a sludge content and a particle content in the waste oil is decreased by said treating;
- controlling from the control system (15) an outlet flow of the treated waste oil from the oil treatment part (5) to be directed to one of a number of different storages (9a, 9b, 9c) provided in the waste oil recovering system (1), wherein said controlling is provided in dependence of at least one measured value of said one or more measured properties, whereby the storages (9a, 9b, 9c) are assigned to different predefined value ranges for at least one of the properties, wherein the storages (9a, 9b, 9c) are assigned to predefined value ranges for one or more of at least water content, density and viscosity, where said value ranges correspond to ranges for specific oil products, whereby treated waste oil is sorted into different storages (9a, 9b, 9c) according to which final oil product it possibly can be used as after treatment.

2. Method according to claim 1, further comprising the steps of:
- forwarding a sample of the treated oil to an external laboratory where analyses as requested by a customer are performed on the sample of treated oil;
- receiving from the external laboratory analyse test results;
- comparing said analyse test results with a customer specification;
- evaluating based on this comparison if the purified waste oil is within customer specification requirements.

3. Method according to any one of the preceding claims, further comprising the steps of:
- forwarding a sample of the received waste oil, before and/or after treatment in the waste oil recovering system, to an external laboratory where analyses are performed in order to provide a report which shows a possible sameness with one or more oil substances which are already registered at a chemical agency, wherein said report further comprises CAS-numbers for these oil substances;
- receiving said report from the external laboratory;
- generating one or more oil product documents, such as product data sheet and safety data sheet, which are required for selling the oil as an oil product, wherein at least some of the information needed for these oil product documents is retrieved from a database at the chemical agency based on said CAS-numbers.

## Patentansprüche

1. Verfahren zum Rückgewinnen von Altöl zu einem oder mehreren Ölprodukten, das Verfahren die folgenden Schritte umfassend:
- Aufnehmen von Altöl in einem oder mehreren Aufnahmebehältern (3a, 3b, 3c) eines Altölrückgewinnungssystems (1);
- Weiterleiten von Altöl aus einem einzelnen Aufnahmebehälter (3a, 3b, 3c) in einen Ölbehandlungsteil (5) des Altölrückgewinnungssystems (1);
- Messen einer oder mehrerer Eigenschaften in dem Altöl durch mindestens einen Sensor (8), der entweder an einer Messposition (7a, 7b) in dem Altölrückgewinnungssystem (1) oder an einem externen Analysegerät (80) bereitgestellt wird, an das eine Probe von einer Messposition (7a, 7b) weitergeleitet werden kann, wobei die eine oder die mehreren Eigenschaften eine Dichte, eine Viskosität, eine Wassermenge, eine Aschemenge, eine Partikelmenge und einen Flammpunkt umfassen und der Schritt des Messens vor und/oder während und/oder nach einer Behandlung des Altöls durchgeführt werden kann;
- Anpassen einer oder mehrerer Einstellungen einer oder mehrerer Ölbehandlungsfunktionen in dem Ölbehandlungsteil (5) des Altölrückgewinnungssystems (1) auf Grundlage mindestens eines Messwerts der einen oder der mehreren gemessenen Eigenschaften des Altöls, wobei das Anpassen durch ein Steuersystem (15) durchgeführt wird, das in Kommunikationskontakt mit dem Ölbehandlungsteil (5) und dem mindestens einen Sensor (8) bereitgestellt ist, wobei der Schritt des Anpassens einer oder mehrerer Einstellungen in dem Ölbehandlungsteil Anpassen von Einstellungen in einer oder mehreren von einer Dekanterzentrifuge und/oder einer Hochgeschwindigkeitszentrifuge, einer chemischen Additionsfunktion, einem Mischsystem, einem Filter, einem Absetzbehälter, einer Wassereinspritzdüse und einer Heizung umfasst;
- Behandeln des weitergeleiteten Altöls in dem Ölbehandlungsteil (5) des Altölrückgewinnungssystems (1), wobei der Ölbehandlungsteil (5) eine Dekanterzentrifuge und/oder eine Hochgeschwindigkeitszentrifuge und eine oder mehrere von einer chemischen Additionsfunktion, einem Filter, einem Absetzbehälter, einer Wassereinspritzdüse und einer Heizung umfasst, wobei durch die Behandlung eines oder mehreres von einem Wassergehalt, einem Schlammgehalt und einem Partikelgehalt im Altöl gesenkt werden;
- Steuern eines Auslassstroms des behandelten Altöls aus dem Ölbehandlungsteil (5) durch das Steuersystem (15), um zu einem von mehreren verschiedenen Speichern (9a, 9b, 9c) geleitet zu werden, die in dem Altölrückgewinnungssystem (1) bereitgestellt sind, wobei das Steuern in Abhängigkeit von mindestens einem Messwert der einen oder der mehreren gemessenen Eigenschaften bereitgestellt wird, wobei die Speicher (9a, 9b, 9c) für mindestens eine der Eigenschaften unterschiedlichen vordefinierten Wertebereichen zugeordnet sind, wobei die Speicher (9a, 9b, 9c) vordefinierten Wertebereichen für eines oder mehreres von mindestens einem Wassergehalt, einer Dichte und einer Viskosität zugeordnet sind, wobei diese Wertebereiche Bereichen für bestimmte Ölprodukte entsprechen, wobei behandeltes Altöl in unterschiedliche Speicher (9a, 9b, 9c) sortiert wird, denen gemäß es nach der Behandlung gegebenenfalls als Ölendprodukt verwendet werden kann.

2. Verfahren nach Anspruch 1, ferner die folgenden Schritte umfassend:
- Weiterleiten einer Probe des behandelten Öls zu einem externen Labor, in dem die von einem Kunden angeforderten Analysen an der Probe des behandelten Öls durchgeführt werden;
- Erhalten von externen Laboranalyseergebnissen;
- Vergleichen der Analyseergebnisse mit einer Kundenspezifikation;
- Bewerten auf Grundlage dieses Vergleichs, ob das gereinigte Altöl den Spezifikationsanforderungen des Kunden entspricht.

3. Verfahren nach einem der vorhergehenden Ansprüche, ferner die folgenden Schritte umfassend:
- Weiterleiten einer Probe des aufgenommenen Altöls vor und/oder nach der Behandlung in dem Altölrückgewinnungssystem zu einem externen Labor, in dem Analysen durchgeführt werden, um einen Bericht bereitzustellen, der eine mögliche Äquivalenz zu einer oder mehreren Ölsubstanzen zeigt, die bereits bei einer chemischen Behörde registriert sind, wobei der Bericht ferner CAS-Nummern für diese Ölsubstanzen umfasst;
- Erhalten des Berichts von dem externen Labor;
- Erzeugen eines oder mehrerer Ölproduktdokumente, wie Produktdatenblatt und Sicherheitsdatenblatt, die für einen Verkauf des Öls als ein Ölprodukt erforderlich sind, wobei mindestens einige der für diese Ölproduktdokumente erforderlichen Informationen aus einer Datenbank bei der chemischen Behörde auf Grundlage der CAS-Nummern abgerufen werden.

## Revendications

1. Procédé de récupération d'huile usagée dans un ou plusieurs produits d'huile, ledit procédé comprenant les étapes de :
- réception d'huile usagée dans une ou plusieurs cuves de réception (3a, 3b, 3c) d'un système de récupération d'huile usagée (1) ;
- transfert d'huile usagée, d'une cuve de réception (3a, 3b, 3c) à la fois, dans une partie de traitement d'huile (5) du système de récupération d'huile usagée (1) ;
- mesure d'une ou plusieurs propriétés dans l'huile usagée par au moins un capteur (8), qui est prévu soit au niveau d'une position de détection (7a, 7b) dans le système de récupération d'huile usagée (1), soit au niveau d'un équipement d'analyse externe (80) auquel un échantillon peut être transféré depuis une position de détection (7a, 7b), dans lequel ladite ou lesdites propriétés comprennent un ou plusieurs parmi une densité, une viscosité, une quantité d'eau, une quantité de cendres, une quantité de particules et un point éclair, ladite étape de mesure pouvant être effectuée avant et/ou pendant et/ou après un traitement de l'huile usagée ;
- ajustement d'un ou plusieurs réglages d'une ou plusieurs fonctions de traitement d'huile dans la partie de traitement d'huile (5) du système de récupération d'huile usagée (1) sur la base d'au moins une valeur mesurée desdites une ou plusieurs propriétés mesurées de l'huile usagée, ledit ajustement étant effectué par un système de régulation (15) prévu en communication avec la partie de traitement d'huile (5) et l'au moins un capteur (8), dans lequel l'étape d'ajustement d'un ou plusieurs réglages dans la partie de traitement d'huile comprend l'ajustement de réglages dans un ou plusieurs parmi une centrifugeuse décanteuse et/ou une centrifugeuse à grande vitesse, une fonction d'addition de produit chimique, un système de mélange, un filtre, un décanteur, une buse d'injection d'eau et un dispositif de chauffage ;
- traitement de l'huile usagée transférée dans la partie de traitement d'huile (5) du système de récupération d'huile usagée (1), ladite partie de traitement d'huile (5) comprenant une centrifugeuse décanteuse et/ou une centrifugeuse à grande vitesse et un ou plusieurs parmi une fonction d'addition de produit chimique, un filtre, un décanteur, une buse d'injection d'eau et un dispositif de chauffage, moyennant quoi une ou plusieurs parmi une teneur en eau, une teneur en boue et une teneur en particules dans l'huile usagée est diminuée par ledit traitement ;
- régulation à partir du système de régulation (15) d'un écoulement de sortie de l'huile usagée traitée provenant de la partie de traitement d'huile (5) à diriger vers un stockage parmi un certain nombre de stockages différents (9a, 9b, 9c) prévus dans le système de récupération d'huile usagée (1), ladite régulation étant réalisée en fonction d'au moins une valeur mesurée de ladite ou desdites propriétés mesurées, moyennant quoi les stockages (9a, 9b, 9c) sont attribués à des plages de valeurs prédéfinies pour au moins une des propriétés, les stockages (9a, 9b, 9c) étant attribués à des plages de valeurs prédéfinies pour au moins l'une parmi une teneur en eau, une masse volumique et une viscosité, lesdites plages de valeurs correspondant à des plages pour des produits d'huile spécifiques, moyennant quoi l'huile usagée traitée est triée dans différents stockages (9a, 9b, 9c) selon pour quel produit d'huile final elle peut être utilisée après traitement.

2. Procédé selon la revendication 1, comprenant en outre les étapes de :
- transfert d'un échantillon de l'huile traitée à un laboratoire externe où des analyses telles que demandées par un client sont effectuées sur l'échantillon d'huile traitée ;
- réception des résultats des analyses en laboratoire externe ;
- comparaisons desdits résultats d'analyse avec une spécification client ;
- évaluation, sur la base de cette comparaison, si l'huile usagée purifiée est conforme aux exigences des spécifications du client.

3. Procédé selon l'une quelconque des revendications précédentes, comprenant en outre les étapes de :
- transfert d'un échantillon de l'huile usagée reçue, avant et/ou après traitement dans le système de récupération d'huile usagée, à un laboratoire externe où des analyses sont effectuées afin de fournir un rapport qui montre une similitude possible avec une ou plusieurs substances huileuses qui sont déjà enregistrées auprès d'une agence chimique, ledit rapport comprenant en outre des numéros CAS pour ces substances huileuses ;
- réception dudit rapport du laboratoire externe ;
- génération d'un ou plusieurs documents de produits d'huile, tels que la fiche de données de produit et la fiche de données de sécurité, qui sont nécessaires pour vendre l'huile en tant que produit d'huile, dans lequel au moins une partie des informations nécessaires pour ces documents de produits d'huile est extraite d'une base de données de l'agence chimique sur la base desdits numéros CAS.
